(19) Europäisches Patentamt / European Patent Office / Office européen des brevets

(11) **EP 1 612 532 B1**

(12) **EUROPEAN PATENT SPECIFICATION**

(45) Date of publication and mention of the grant of the patent:
**04.08.2010 Bulletin 2010/31**

(51) Int Cl.:
***G01L 9/00*** (2006.01)

(21) Application number: **05105701.6**

(22) Date of filing: **27.06.2005**

(54) **Optical noninvasive pressure sensor**

Optischer nicht-invasiver Drucksensor

Capteur optique de pression non invasive

(84) Designated Contracting States:
**AT BE BG CH CY CZ DE DK EE ES FI FR GB GR HU IE IS IT LI LT LU MC NL PL PT RO SE SI SK TR**

(30) Priority: **29.06.2004 US 879789**

(43) Date of publication of application:
**04.01.2006 Bulletin 2006/01**

(73) Proprietor: **Alcon, Inc.**
**6331 Hünenberg (CH)**

(72) Inventors:
• **Boukhny, Mikhail**
  **Laguna Niguel, CA 92677 (US)**
• **Yadlowsky, Michael**
  **CA 92620, Irvine (US)**
• **Artsyukhovich, Alexander N.**
  **CA 92629, Dana Point (US)**

(74) Representative: **Hanna, Peter William Derek et al**
**Hanna Moore & Curley**
**13 Lower Lad Lane**
**Dublin 2 (IE)**

(56) References cited:
| | |
|---|---|
| EP-A- 0 157 606 | WO-A-2004/045395 |
| DE-A1- 4 341 232 | US-A- 5 339 289 |
| US-A1- 2004 261 534 | US-B1- 6 428 171 |
| US-B1- 6 533 729 | |

• **PATENT ABSTRACTS OF JAPAN vol. 009, no. 323 (P-414), 18 December 1985 (1985-12-18) & JP 60 149937 A (YAMATAKE HONEYWELL KK), 7 August 1985 (1985-08-07)**

**Description**

**TECHNICAL FIELD OF THE INVENTION**

The present invention relates generally to pressure sensors. More specifically, the present invention relates to noninvasive pressure sensors that measure pressure using optical techniques. Even more particularly, the present invention relates to an optical noninvasive pressure sensor that can be used within an ophthalmic surgical system.

**BACKGROUND OF THE INVENTION**

It is know to use pressure sensors to measure pressure in various media and in a wide-range of applications, including industrial, commercial, consumer and, in particular, surgical applications. Various devices have been developed for measuring or sensing the pressure in a volume of fluid. Many of these devices have a load cell containing a probe or other sensing apparatus that must physically contact the fluid being measured. While in many mechanical applications (for example, an oil pressure sensor used in an internal combustion engine), physical contact between the probe and the fluid raises no particular concerns, such contact is undesirable in medical applications where the fluid may be a virally or microbially contaminated biological fluid. Under these conditions, if a probe is allowed to contact the biological fluid, the probe must either be discarded or sterilized prior to re-use. Therefore, in medical pressure sensing applications and, in particular, in surgical applications, it is important to use a non-invasive pressure sensor that does not contact the fluid being measured.

Several noninvasive pressure sensors have previously been disclosed in U.S. Patents Nos. 1,718,494, 2,260,837, 2,510,073, 2,583,941, and 3,805,617. These devices use a metal disk within the electromagnetic field of an energized coil to sense pressure changes. As the iron disk moves closer or farther from the coil, the current flow through the coil varies, and these current fluctuations can be used to calculate pressure changes. While these devices are satisfactory for measuring relatively large pressure changes, more minute pressure changes do not cause the current to fluctuate to a sufficient degree to provide an accurate and reliable indicator of pressure variation.

Another basic technique for noninvasive pressure sensing involves the use of a deflectable diaphragm. In such a pressure sensor, a pressure is applied to the diaphragm, either directly or through an isolating medium, and the deflection of the diaphragm is measured. Various deflection measurement techniques can be used. For example, a strain gauge mounted to the diaphragm can provide an indication of deflection. These types of pressure sensors avoid contacting the fluid being tested by using a test chamber separated into two parts by the flexible diaphragm. The fluid body being measured is typically contained on one side of the chamber and the pressure sensor is in communication with the second side of the chamber. Any increase or decrease in the fluid pressure causes the diaphragm to either expand into the second side of the chamber or to be pulled into the fluid part of the chamber, thereby increasing or decreasing the pressure in the second side of the chamber by an amount corresponding to the change in fluid pressure in the first side of the chamber. While these diaphragm type pressure sensors do not invade the test fluid and can be used to detect relatively small pressure changes, the accuracy of such sensors relies to a great extent on the compliance or elastic properties of the diaphragm, properties that can be hard to control during manufacture and that may change over time as the diaphragm is repeatedly stretched and relaxed.

One type of noninvasive pressure sensor that uses a deflectable diaphragm as described above is disclosed in related U.S. Patent Application No. 10/610,087, filed June 30, 2003 and entitled "Noninvasive Pressure Sensing Assembly". The invention disclosed in the '087 application uses an optical means for measuring the deflection of the diaphragm and relating that deflection to a pressure measurement. The disclosed sensor includes a light source, such as a light emitting diode or normal room illumination, positioned to reflect light off of the surface of a membrane. The membrane is in contact with the fluid in which the pressure is to be measured so that changes in the fluid pressure cause movement of the membrane. A charge-coupled device (CCD) camera captures the reflected light off of the membrane and the reflected light is analyzed to determine the relative movement of the membrane based on the changes in the pattern of the reflected light. Grooves and/or patterns can also be printed on the membrane as means for detecting deflection of the membrane. This type of optical non-invasive pressure sensor, however, requires the focusing and processing of multiple light beams reflected from the membrane as well as the creation and comparison of grating and/or printed patterns reflected from the membrane. These comparisons can lead to inaccuracies and require additional computational power as well as tighter tolerances for the measured reflected light. In particular, this type of optical pressure sensor can be subject to excessive signal noise if the orientation between the grating/pattern and the CCD is inadvertently altered due to thermal or mechanical stress.

WO 2004/045395 discloses a non-invasive pressure sensing assembly, where light beams incident on a flexible diaphragm are detected by a sensor. The sensor comprises a pressure sensitive fluid, through which the light is transmitted. The pressure sensitive fluid gives rise to changes in the characteristics of the transmitted light, such as intensity, when a pressure is applied.

Another type of noninvasive pressure sensor, described in PCT Publication WO93/24817 (corresponding to U.S. Patent No. 5,392,653), uses a flexible diaphragm with an attached magnet. By attaching an iron disk to the diaphragm, the diaphragm is mechanically coupled to a transducer. In order for the transducer to measure the pressure accurately, the diaphragm is made extremely flexible. Nevertheless, variations in the flexibility of the diaphragm affect the accuracy of the pressure measurements. In addition, this assembly relies on firm contact between the magnet and the transducer, variations of which will also affect the accuracy of the pressure measurement. Another noninvasive pressure sensor is disclosed in PCT Publication WO99/23463. This pressure sensor includes a pressure chamber separated from the pressure transducer by a thin compliant membrane. This device, however, relies on the use of a bulky and relatively expensive load cell and stepper motors to position the load cell against the diaphragm.

EP 0157606 describes a pressure transducer and sensing apparatus to determine deflection of a diaphragm which is illuminated at selected locations by a coherent laser source via optical fibres. The light reflected by the diaphragm forms interference fringe patterns for transmission to a fringe counting circuit. By digital techniques, the fringe count is converted into a determination of diaphragm deflection.

Therefore, a need exists for an optical noninvasive pressure sensor that can reduce or eliminate the problems associated with prior art noninvasive pressure sensors, such as poor accuracy, poor reliability, and high cost, particularly for pressure sensing applications requiring the noninvasive detection of relatively small pressure changes in a fluid.

**BRIEF SUMMARY OF THE INVENTION**

The invention provides an assembly in accordance with claim 1. Advantageous features are provided in dependent claims.

The present invention improves upon prior art pressure sensors by providing an optical noninvasive pressure sensor capable of accurately measuring small pressure changes, in accordance with the claims which follow. In particular, the noninvasive method for pressure detection of the present invention allows for real-time indication of fluid pressure through a robust sensor that is inexpensive to manufacture and employ. The embodiments of the pressure sensor of this invention can be used in any system requiring a fluidics module, such as an ophthalmic surgical system.

One embodiment of the pressure sensor of this invention is a non-invasive pressure sensing assembly comprising: a plurality of coherent light sources, wherein the plurality of coherent light sources are located in a fixed relationship to one another; an image sensor; and a pressure chamber, comprising a flexible diaphragm, the flexible diaphragm configured to flex in response to a change in pressure in the pressure chamber and operable to reflect a beam of light originating from each of the plurality of coherent light sources onto the image sensor. The pressure sensing assembly can further comprise a processing module operably coupled to the plurality of coherent light sources and to the image sensor and a memory operably coupled to the processing module, wherein the memory includes operational instructions that cause the processing module to carry out the steps of an embodiment of the method for non-invasive pressure sensing of this invention. Such a method can comprise the steps of: directing the plurality of coherent light beams, at a known incidence angle, onto the flexible diaphragm, wherein the plurality of coherent light beams form a pattern of light spots on the diaphragm; capturing at the image sensor an image of the light spot pattern reflected from the diaphragm, wherein the light spot pattern is indicative of the pressure within the pressure chamber; and determining the pressure within the pressure chamber from the captured light spot pattern of the image.

The plurality of coherent light sources can, in a preferred embodiment, comprise a first coherent light source and a second coherent light source, providing, respectively, a first light beam and a second light beam. The pressure sensing assembly can further comprise a fluidics interface operably coupled to the processor for receiving instructions from the processor to control fluid flow in a fluidics system coupled to the pressure chamber. Such a fluidics interface could be, for example, part of a surgical system, such as an ophthalmic surgical system, incorporating an embodiment of the present invention. The pressure sensing assembly can also comprise a calibration interface for providing calibration inputs to the processor. Light source optics, for focusing the beams of light originating from the plurality of light sources onto the diaphragm, and imaging optics, for focusing the reflected light beams from the diaphragm onto the image sensor, can be included in the various embodiments of this invention.

The invention further provides a method in accordance with claim 23. Advantageous features are provided in the dependent claims.

Embodiments of the present invention can be implemented to measure pressure in any fluidic system requiring a noninvasive pressure sensor. For example, a surgical system may require such a noninvasive pressure sensor to avoid contamination from a fluid that may have become virally or microbially infected from contact with the patient. One such system is the Infinity Vision Surgical System manufactured by Alcon Laboratories, Inc. of Fort Worth, Texas, for ophthalmic surgery. Other such uses will be apparent to those familiar with the art.

One objective of the present invention is to provide an optical noninvasive pressure sensor. Another objective of the present invention is to provide a relatively inexpensive pressure sensor. Still another objective of the present invention is to provide a pressure sensor that can measure pressures less than ambient pressure. These and other advantages and objectives of the present invention will become apparent from the detailed description, drawings and claims that follow.

## BRIEF DESCRIPTION OF THE DRAWINGS

A more complete understanding of the present invention and the advantages thereof may be acquired by referring to the following description, taken in conjunction with the accompanying drawings, in which like reference numbers indicate like features and wherein:

FIGURE 1 is a simplified block diagram of a noninvasive optical pressure sensor according to one embodiment of the present invention;

FIGURE 2 is a simplified block diagram of the noninvasive optical pressure sensor of FIGURE 1 at a lower applied pressure;

FIGURE 3A and FIGURE 3B are simplified block diagrams illustrating the ability of the embodiments of this invention to compensate for deviations from a reference diaphragm;

FIGURE 4 is a simplified block diagram illustrating a method for calibrating the incidence angle of light beams onto a diaphragm of an embodiment of this invention;

FIGURE 5 is a simplified block diagram illustrating a method for precisely calculating the angle at which the laser/ light beam is incident upon the diaphragm of an embodiment of this invention.

FIGURE 6 is a simplified drawing of a coordinate system defined to calculate the change in the angle of incidence of a light beam incident on a diaphragm of an embodiment of this invention;

FIGURE 7 illustrates a method of creating a look-up table to determine pressure chamber pressures from diaphragm deflections;

FIGURE 8 is a simplified block drawing illustrating the various opto-mechanical components of an embodiment of this invention;

FIGURE 9 is a simplified diagram illustrating the ability of the embodiments of this invention to tilt an image sensor to maintain spot focus as the diaphragm deflects with pressure changes; and

FIGURE 10 is a graph illustrating a calibration curve for a pressure sensor implemented in accordance with this invention.

## DETAILED DESCRIPTION OF THE INVENTION

Preferred embodiments of the present invention are illustrated in the FIGUREs, like numerals being used to refer to like and corresponding parts of the various drawings.

The various embodiments of the present invention provide for a noninvasive optical pressure sensor that can be used in any system requiring pressure measurement, and in particular, in a fluidics system in which it is necessary to measure pressure. The embodiments of the present invention are especially suited for use in surgical machines, or systems, such as an ophthalmic surgical system, in which it is desirable to measure the pressure of a possibly contaminated fluid.

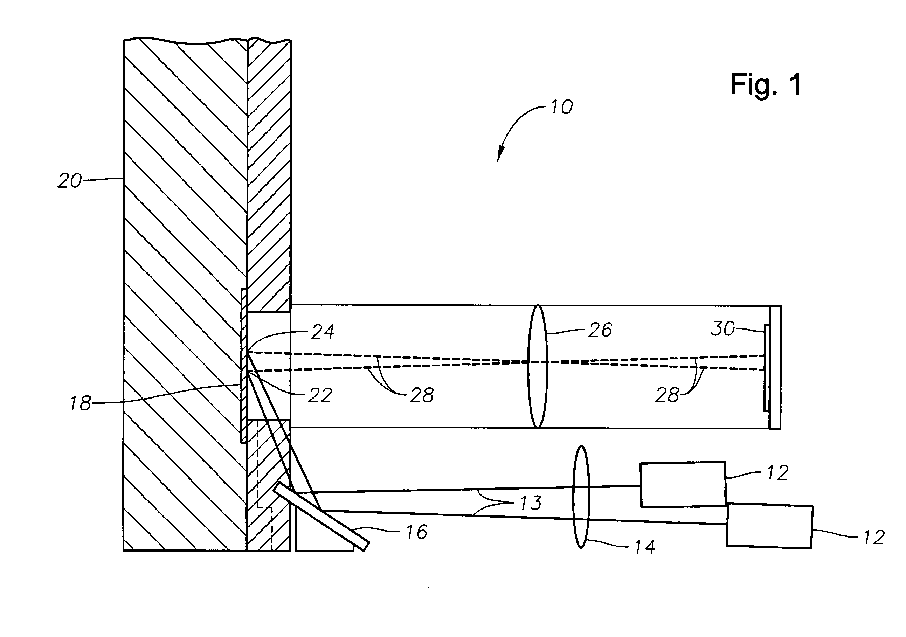

FIGURE 1 is a simplified block diagram of a noninvasive optical pressure sensor according to one embodiment of the present invention. The pressure sensor can generally include light sources 12, source lens 14, mirror 16, pressure chamber 20, flexible membrane 18, imaging lens 26, and image sensor 30. Other embodiments can comprise a single light source 12. A single light source 12 or multiple light sources 12 can also be focused directly onto flexible membrane 18. As will be further apparent to those familiar with the art, other optical elements can be used to form an optical path between light source 12 and diaphragm 18 to focus the light from light source 12 onto diaphragm 18.

Pressure chamber 20 can contain the fluid having a pressure to be measured and may be made of any suitable material, such as metal, glass, or plastic, and may be of any suitable size or shape and can contain a port(s) (not shown) through which the pressure within chamber 20 may be varied. Diaphragm 18 is a flexible member that can be made of any suitably compliant material having good dimensional stability, such as stainless steel. Diaphragm 18 can further be a flat diaphragm, a pre-curved diaphragm (concave or convex) or a corrugated diaphragm. Diaphragm 18 should have a consistent texture (if present) across the portion of its surface that may receive incident light from a light source 12. Light sources 12 can be any of a variety of commercially available light sources, such as a laser, laser diode, or LEF, but preferably a laser diode as known in the art.

Light sources 12 provide beams of light 13, which are directed to pass through focusing lens 14 and onto mirror 16. Mirror 16 reflects light beams 13 onto diaphragm 18. At diaphragm 18, light beams 13 are focused as spots 22 and 24 on diaphragm 18 and are reflected as light beams 28, corresponding to the reflected images of spots 24 and 22 from diaphragm 18. Light beams 28 pass through lens 26. Lens 26 focuses light beams 28 on image sensor 30. Image sensor 30 captures the reflected images of spots 24 and 22 and, in particular, the spatial separation between spots 24 and 22. Image sensor 30 can be any of a variety of commercially available devices such as a CCD (charge-coupled device) or a CMOS (complementary-metal-oxide semiconductor) image sensor, or even a PD (photo sensitive diode) capable of capturing and differentiating between the reflected images of spots 24 and 22.

As shown in FIGURE 1, light beams 13 are focused by source lens 14 onto mirror 16, which redirects light beams 13 onto diaphragm 18, forming spots 24 and 22. Light beams 13 are directed onto diaphragm 18 at a set incidence angle by mirror 16. Spots 24 and 22 are reflected off of diaphragm 18 as light beams 28 and refocused at image sensor 30 via imaging lens 26. When the pressure within chamber 20 is at or near a reference pressure (e.g., ambient pressure), then as shown in FIGURE 1, diaphragm 18 will be at a preset reference position (e.g., flat as shown). In FIGURE 1, the reference position of diaphragm 18 is shown as flat for purposes of illustration, but the diaphragm 18 reference position can be any arbitrarily determined reference position at which the pressure sensor is calibrated for a reference pressure, such as ambient pressure.

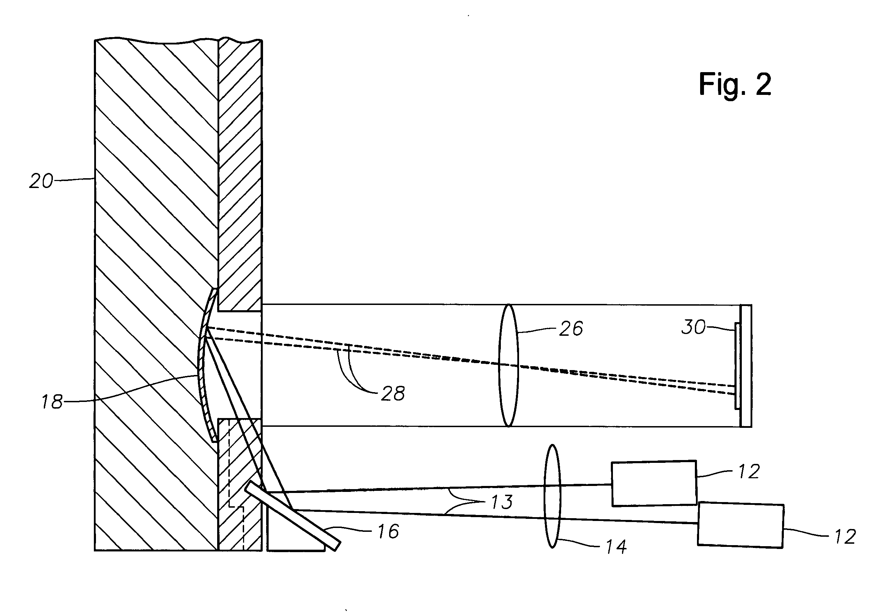

Based on the relative positions of lights 12 to one another (a known and fixed relationship) and the angle of incidence for light beams 13 provided by mirror 16, spots 24 and 22 formed by reflected light beams 13 will be separated by a preset amount (i.e., have a fixed initial separation at a reference diaphragm position). The separation between spots 24 and 22 will be reproduced and detected at image sensor 30 (in the embodiment shown, this is done via imaging lens 26, which focuses the reflection of spots 22 and 24 on the image sensor 30). When the pressure within chamber 20 is below the set reference pressure (e.g., ambient pressure), as shown in FIGURE 2, diaphragm 18 will be deflected inward (become concave), causing the position of spots 22 and 24, both on the diaphragm and relative to one another, to change. The change in diaphragm position and in relative spatial separation between spots 22 and 24 is reproduced and detected at image sensor 30, as previously described. One skilled in the art will recognize that in a similar manner, pressure changes in chamber 20 above the reference pressure will cause diaphragm 18 to become convex (not shown), causing a shift in the position of spots 22 and 24 in a direction opposite to that of when pressure drops below the reference pressure, with a corresponding change in the separation between spots 22 and 24. The change in position of spots 22 and 24 will similarly be reproduced and detected at image sensor 30.

Thus, following a change in pressure, the change in relative separation and in diaphragm position of spots 22 and 24 is detected and captured by image sensor 30, and can then be analyzed using software well known in the art to calculate the displacement of diaphragm 18. The displacement of diaphragm 18 can then be correlated to a corresponding change in pressure. The displacement of diaphragm 18 as indicated by the position changes of spots 22 and 24, directly relates to the pressure and pressure changes within chamber 20.

An alternative embodiment of the present invention can use a single light source 12 to shine a single spot onto diaphragm 18. As the pressure in chamber 20 changes, diaphragm 18 will deflect as previously described and the change in the relative position of the single spot on diaphragm 18 can be correlated to the change in pressure in chamber 20. Alternative embodiments can also include directing the light source or sources 12 directly onto diaphragm 18 without the optical components (path) formed by lens 14 and mirror 16. For example, a focusing assembly, such as a lens or a simple pinhole, can be incorporated into each light source 12. Other focusing means for directing light from light sources 12 onto diaphragm 18 (and/or from diaphragm 18 onto image sensor 30) will be known to those familiar with the art and are contemplated as being within the scope of this invention. A more detailed explanation for determining the angle of incidence of light beams 13 onto diaphragm 18 and for calibrating a pressure sensor of the present invention (i.e., determining reference positions and values) are provided later below.

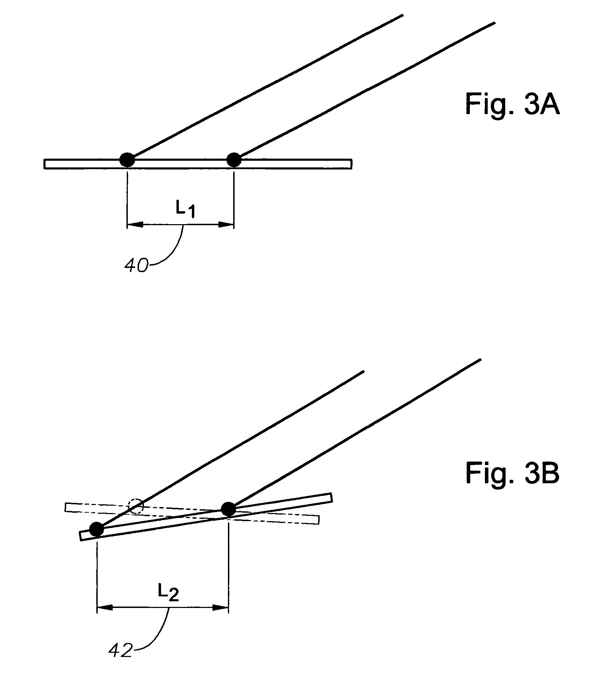

FIGUREs 3A and 3B illustrate how the embodiments of this invention can compensate for a change in the orientation of diaphragm 18 or chamber 20 from a reference position. Such a change in orientation might be caused, for example, by a variation in fit of a replaceable fluidics module in an ophthalmic surgical system. Such systems can use a replaceable fluidics cassette which can comprise a pressure chamber having a diaphragm, corresponding to chamber 20 and diaphragm 18 of FIGURE 1. As shown in FIGURE 3A, when diaphragm 18 (chamber 20) is at a reference position (here shown as a flat diaphragm 18 and a chamber 20 oriented to a reference position), spots 22 and 24 on diaphragm 18 are separated by a first separation indicated by Line 40. In the event the initial position of a chamber 20 and diaphragm 18 changes from the reference position prior to a pressure measurement being made (e.g., due to a tilt from the reference position when a new replaceable chamber is inserted), then as shown in FIGURE 3B, the new position of spots 22 and 24 on diaphragm 18 can be measured and the tilt in the chamber 20/diaphragm 18 from the reference position can be compensated for prior to pressure measurements being made. This can be done, for example, as part of a calibration routine.

As when detecting changes in pressure during normal operation, image sensor 30 can be used to detect the change in the linear separation between spots 22 and 24 due to a tilt as described above and provide this information to a processing system to compensate for the tilt. Such a processing system can comprise a processor, a memory and computer executable software instructions stored within the memory and capable of being executed by the processor. A processing system in accordance with the teachings of this invention is described more fully later below. Software for correlating the change in separation of spots 24 and 22 to the change in pressure within a chamber 20, or to a change in reference position due to variations between replaceable chambers, will be known to those familiar with the art. Any such software can be used with the embodiments of the present invention.

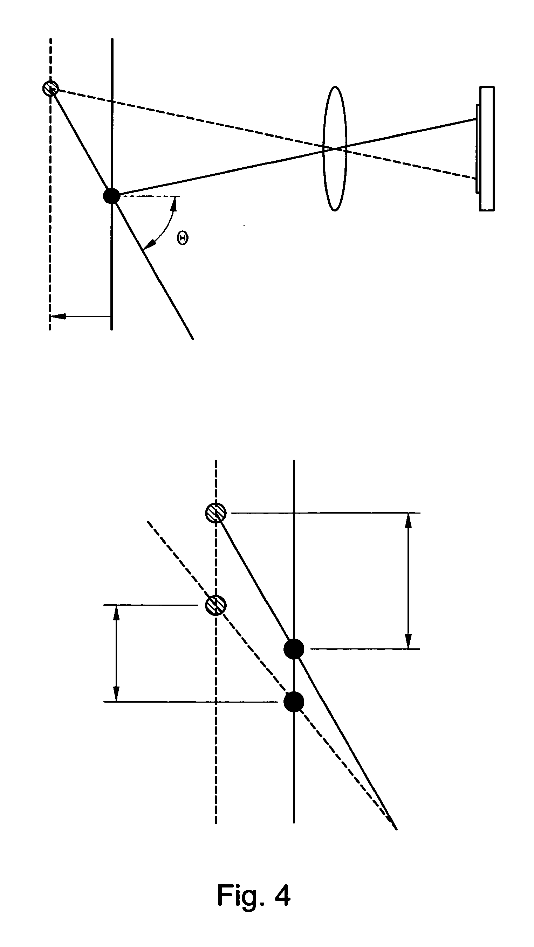

FIGURE 4 is a simplified diagram illustrating a method for calibrating the incidence angle of light beams 13 onto diaphragm 18 (which form spots 22 and 24). It is necessary to know the angle of incidence of light beams 13 onto diaphragm 18 because the spacing of spots 22 and 24 on diaphragm 18 depends on the angle of incidence of the light beams 13. To determine the angle of incidence, the location of a spot, such as spot 22 of FIGURE 1, is measured on a reference diaphragm, such as previously described above. The diaphragm 18 is then deflected from the reference position to a test position and the change in spot location is measured. Using well-known mathematical formulas, the angle of incidence is computed and the process is repeated for each light source 12 as needed. In this way, the angle of incidence of the light beams 13 onto diaphragm 18 is known.

As discussed above, one embodiment of this invention can be implemented to measure pressure in a surgical cassette of a surgical system. Such a cassette can include a chamber 20 bounded by a diaphragm 18 that is connected to the aspiration line of the fluidics portion of the corresponding surgical system. One side of the diaphragm 18 can be exposed to the ambient air pressure. The diaphragm 18 will deform as described above in response to pressure differences between the aspiration line and ambient pressure.

In each embodiment of this invention, the relationship between diaphragm 18 deformation and pressure difference is monotonic (or very nearly so). Thus, measurement of the diaphragm 18 deformation can be used to infer the chamber 20 pressure based on a calibration relationship or table. The diaphragm 18 deformation can be uniquely quantified as the deflection of its center. This can be determined by projecting the narrow beams of light 13, which preferably are generated by a laser light source, onto the surface of the diaphragm 18 at an oblique angle and imaging the resulting scattered light spots 22 and 24 on an image sensor 30 (e.g. a CCD or CMOS image sensor chip).

The location of the image of the spot can be quantitatively determined from the image data or a sub-set of the image, such as one or a few lines of pixel data, using one of a number of techniques. Options for quantifying the location of the peaks include determining the center of mass of the spot, correlating the image with a reference shape and finding the peak of the result, or fitting a curve to the data and determining the shift required to minimize the error of the fit. The correlation technique is preferred because it can be made to work with different beam shapes (including asymmetric beams), is effective at suppressing or averaging out noise and can be implemented efficiently with a digital signal processor.

Initially the laser spots' 22 and 24 location is measured for a reference pressure (such as ambient, or no net pressure difference). Pressure measurements are made by comparing the location of the laser spots 22 and 24 on the image sensor 30 for that pressure condition to their position for the reference pressure (or alternatively, directly through the use of the absolute location of the spots 22 and 24 images on the image sensor 30, compared to known landmarks on the image sensor and/or the diaphragm 18). For time critical applications, the relative motion of the spots 22 and 24 can be directly converted to pressure using a pre-computed look-up table as described below.

A number of elements must be considered to make the pressure sensor of this invention accurate and robust. First, it is important to know the angle (or average angle) at which a light beam 13 is incident on the diaphragm 18. For some applications it is desirable to know the incidence angle to an accuracy of approximately 1°. At the same time, it is difficult to insure that the orientation of the diaphragm 18 with respect to the chamber 20 and the position of the chamber 20 with respect to a fluidics mechanism in which it may be implemented will be reproducible enough to insure that this condition will hold, in particular in the case where the chamber 20 and diaphragm 18 are implemented as a replaceable unit. Therefore, it is necessary to precisely measure the angle of incidence of the light beams 13 with respect to a reference diaphragm 18 when a system implementing an embodiment of this invention is manufactured and then measure changes in these angles each time a new chamber 20/diaphragm 18 unit is inserted in the system for a surgical procedure or session.

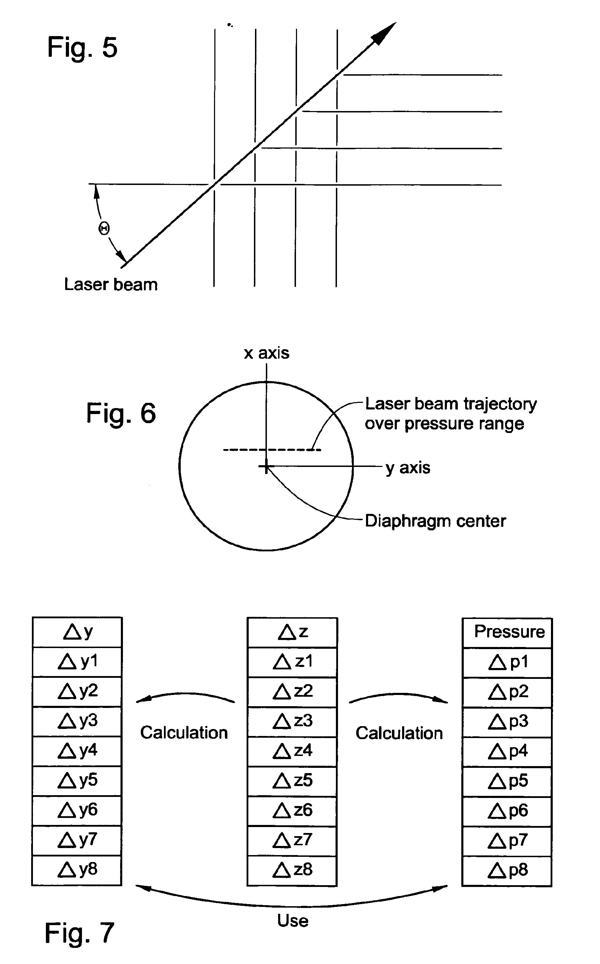

At time of assembly, the angle of incidence of a light beam 13 with respect to the normal of a flat (or other reference position) diaphragm 18 can be measured in several different ways. In the first method, a diaphragm 18 or test target is moved towards or away from the image sensor 30 in precisely measured increments that approximately span the range of positions that the diaphragm 18 may occupy during actual pressure measurements. As shown in FIGURE 5, the height (y) of a laser spot such as spot 22 or 24 as a function of position of a target location (z) can then be used to precisely calculate the angle (?) at which the laser/light beam is incident upon the diaphragm. This can be done by regressing the height of the spot in diaphragm coordinates against the location of the optical spot on the target using a well know least squares approach. The arc tangent of the slope of the line relating beam height to target spacing gives the angle of incidence.

Alternatively, a series of known pressures can be applied to the diaphragm 18 and the resulting position of the spot on the diaphragm 18 can be recorded. The response of the diaphragm 18 (deflection as a function of pressure) must be known in advance. The angle of incidence can then be determined by comparing the spot location on diaphragm 18 measured for each pressure to the predictions of a model (described below) that relates the location of the spot on the diaphragm 18 to the angle of incidence of the beam 13. The angle of incidence is determined by numerically solving for the angle that best aligns the model to the data.

One or both of the above procedures can be used during the manufacture of an embodiment of the pressure sensor of this invention to establish a reference angle of incidence for any light source 12 within the system. Accurate pressure measurements (e.g. accuracy of the greater of 10 mm Hg or 10%), however, require that the incidence angle be updated each pressure measuring session. This can be done by using two or more light sources. By measuring the locations of the two spots 22 and 24 at some reference pressure (e.g. no applied pressure) at manufacture time, instrument reference positions can be determined for each spot. When a system implementing a pressure sensor in accordance with this invention is used in the field, the positions of each of the laser spots can again be determined for a known pressure, such as P=0 mm Hg or ambient. These session reference locations are compared to the original reference locations. The two (or more) spots provide additional information that can be used to determine changes in both the angle of incidence of the light from the light sources 12 (more precisely, the angle of incidence with respect to the plane that contains the two light beams 13) and the distance between the diaphragm 18 and the instrument itself.

To calculate the change in the angle of incidence, it is helpful to define a coordinate system. As shown in FIGURE 6, this can be done by setting the y axis parallel to the direction of beam motion with changes in pressure/diaphragm 18 position and the x axis perpendicular to the y axis, but in the plane of the diaphragm 18. For the case of two light sources 12, the y-component of the instrument reference spot locations can be designated as y10 and y20. The corresponding components of the spot positions for the session references can be designated as y11 and y21. If the angle between the two laser beams is assumed to not change (i.e., any change that occurs is small compared to their common change in angle of incidence with respect to the diaphragm) due to manufacturing tolerances and variability of the positioning of the chamber 20 in the instrument, then the change in the angle of incidence $\delta\theta$ for the session configuration relative to the instrument reference is given by

$$\tan\delta\theta = \frac{(y_{21} - y_{20})\cot(\theta_2) - (y_{11} - y_{10})\cot(\theta_1)}{y_{20} - y_{10}} \qquad \textbf{EQUATION 1}$$

where $\theta_1$ and $\theta_2$ are the angles of incidence of beams 1 and 2 (from two light sources 12) respectively.

Once the angle of incidence has been measured for a particular unit containing a chamber 20 (installed for a particular session), a look-up table can be produced to directly relate pressure to the relative position of a laser spot. The direct relationship between spot location and pressure is difficult to calculate. However, it is possible to readily determine the spot location and pressure associated with a particular deflection of the vertex of the diaphragm 18. Therefore, a convenient method for developing the look-up table is to start with a somewhat arbitrary, but dense array of z-plane deflection values ($\Delta z$) for the diaphragm 18 that range from the lowest to highest deflections that a system implementing an embodiment of the pressure sensor of this invention is intended to support. For example, if under the conditions of interest the diaphragm 18 vertex may move from -0.3 mm to 0.7 mm, it is desirable to have on the order of 100 or more points, so that the $\Delta z$ array can correspond to $10\mu m$ steps in position and include 101 points - 0.3 mm, - 0.29 mm, - 0.28 mm, ..., 0.69 mm, 0.7 mm.

The pressure associated with different vertex deflections can be measured by applying a series of calibrated pressures to the diaphragm 18 and measuring the deflection of the center of the diaphragm 18 using either a mechanical probe or an optical technique, such as the processes described herein (laser spot position can be readily converted to equivalent diaphragm 18 deflection if the angle of incidence is known). The pressures corresponding to the array of $\Delta z$ values described above can be computed by interpolating between the data points of the measured diaphragm 18 pressure response curve.

At the same time, the location where a light beam 13 would hit the diaphragm for each of the diaphragm 18 deflections $\Delta z$ can be calculated by using the well known theory of exact ray tracing, as described, for example, on p. 309 of Modern Optical System Design, 3rd Edition, by Warren Smith. To use this ray analysis, the diaphragm 18 is assumed to assume an approximately spherical shape in response to an applied pressure. The curvature, c, of the diaphragm 18 can be approximated as

$$c = \frac{-3.333 * \Delta z}{\Delta z^2 + a^2}$$

**EQUATION 2**

where "$\Delta z$" is the deflection of the vertex of the diaphragm 18 and "a" is the radius of the diaphragm 18. The factor of 3.333 in the numerator is used in this case instead of 2 to account for the fact that the effective radius of the diaphragm 18 is smaller than its physical size because the fixed edge of the diaphragm 18 only allows its center portion to move. The ray trace procedure indicates where a light beam 13 will hit the diaphragm 18. This position can either be used directly or converted to a relative position ($\Delta y$) by comparing it to the position associated with the reference position where, for example, pressure chamber 20 is at zero pressure.

Using the procedure described above, it is possible to calculate both the laser spot 22 and 24 locations ($\Delta y$) and the pressures associated with each of the initial values of the $\Delta z$ array, shown in FIGURE 7. Once the $\Delta y$ values and the pressures have been calculated, they form a look-up table that relates relative laser spot 22 and 24 position to pressure. For ease in looking up values, interpolation can be used to place the $\Delta y$ values on a regular spacing. Pressure measurements can then be made by determining the location of the laser spot(s) 22 and 24 and using the look up table to convert this position or relative position to a pressure. This process can be performed by a processor operably connected to the image sensor 30.

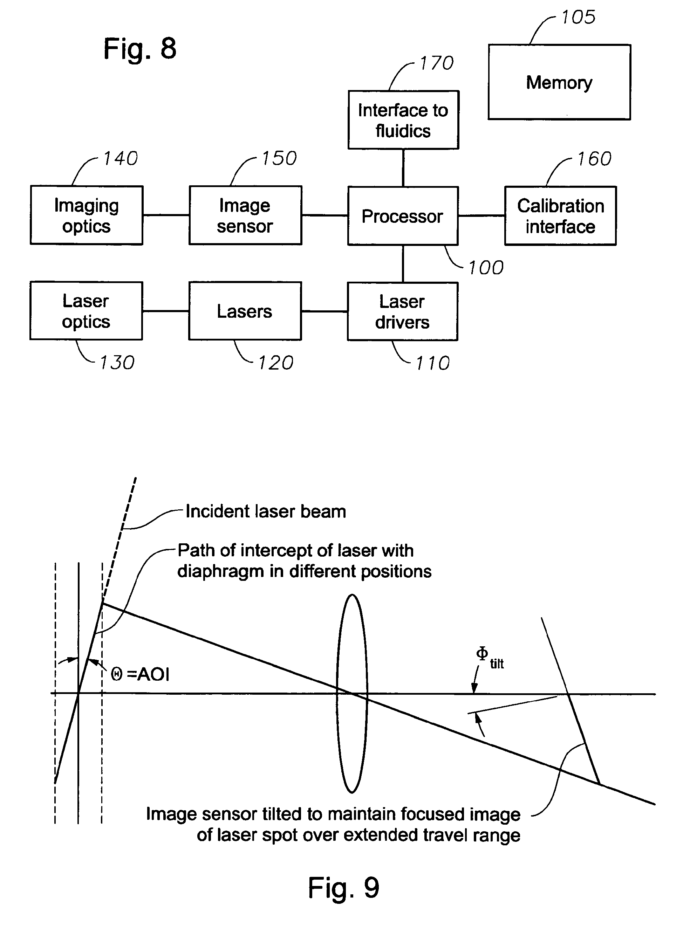

Embodiments of a pressure measurement system in accordance with this invention generate the light beams 13, image the location of the light beams 13 scattering from the surface of the diaphragm 18, determine the location of the imaged spots 22 and 24, process the information as described above, and store calibration information. FIGURE 8 shows another embodiment of a pressure sensing assembly of the present invention, illustrating in block form the various elements for performing the above-described functions.

As shown in FIGURE 8, Processor 100 is a central processing unit for coordinating the various functions of a system in accordance with this invention. Processor 100 can provide an input to light source drivers 110, as well as receive as an input information from light source drivers 110, for example, during a calibration procedure. Processor 100 can process the light spot 22 and 24 positional information received from image sensor 150 (corresponding to image sensor 30 of FIGURE 1) and determine the pressure within chamber "20 in a manner as previously described. Processor 100 can provide the derived pressure information to a fluidics system of, for example, an ophthalmic surgical system, via a fluidics interface 170. Such information can be used by the surgical system to control various flows within the fluidic system, such as aspiration flow. Calibration interface 160 can be used for calibrating the pressure sensor, as previously described.

A memory 105 is operably coupled to processor 100 and is operable to store computer executable software instructions for performing the various steps of the embodiments of the methods of this invention Imaging optics 140 can comprise any optics as required for a given implementation (e.g., imaging lens 26) as can light source optics 130 (e.g., source lens 14). Light sources 120 correspond to light sources 12 of FIGURE 1 and can comprise any such light source as described herein.

Processor 100 may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 105 may be a single memory device or a plurality of memory devices. Such a memory device may be a read-only memory, random access memory, volatile memory, non-volatile memory, static memory, dynamic memory, flash memory, and/or any device that stores digital information. Note that when the processor 100 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry. The memory 105 stores, and the processor 100 executes, operational instructions corresponding to at least some of the steps and/or functions illustrated in Figures 1-9.

In a particular embodiment, the memory 105 is operably coupled processor 100 and includes operational instructions that cause the processor 100 to direct (e.g., via the light source drivers 110) a plurality of coherent light beams, at a known incidence angle, onto a flexible diaphragm, wherein the flexible diaphragm forms a portion of a pressure chamber and is configured to flex in response to a change in pressure in the pressure chamber and wherein the plurality of coherent light beams form a pattern of light spots on the diaphragm; capture at an image sensor an image of the light spot pattern reflected from the diaphragm, wherein the light spot pattern is indicative of the pressure within the pressure chamber; and determine the pressure within the pressure chamber from the captured light spot pattern image. Memory 105 can further include operational instructions that cause the processor 100 to calibrate itself at a reference pressure by associating a reference light spot pattern to a reference diaphragm position corresponding to the reference pressure.

Returning to FIGURE 1, the opto-mechanical portion of an embodiment of the pressure sensor of this invention is shown. A diaphragm 18 can be imaged in sharp focus for a range of diaphragm 18 positions. As the diaphragm 18 deflects due to changing pressures within chamber 20, the image of the spots 22 and 24 on the image sensor 30 can blur, making it harder to determine the precise location of the spots 22 and 24. This can be compensated somewhat by tilting the image sensor 30 such that a hypothetical extended object occupying the same space as the incident light beams 13 would be in focus at the image sensor 30. This is illustrated schematically in FIGURE 9. The tilt of image sensor 30 can be a predetermined amount, or can be adjustable based on the particular application of the pressure sensor.

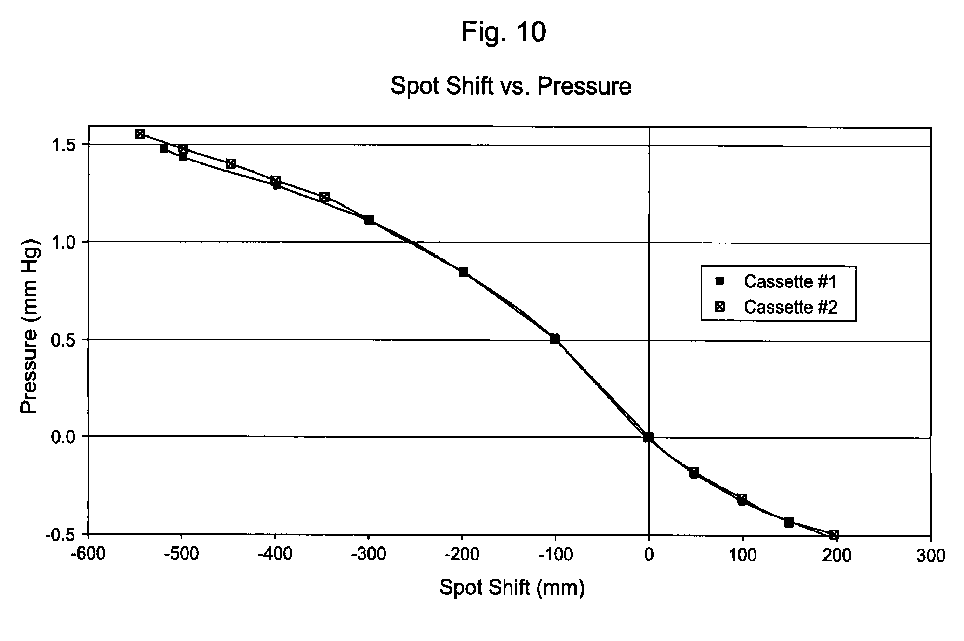

FIGURE 10 is a graph illustrating one calibration curve for pressure (mm Hs) to the spot shift on diaphragm 18 in millimeters. The spot shift in this case is a change in the linear separation between spots 24 and 22. Curves such as shown in FIGURE 10 can be generated so that appropriate software can be used to correlate the change in distance between spots 24 and 22 to a corresponding change in pressure within chamber 20. These generated curves can be different for different pressure sensors implemented in accordance with this invention.

The embodiments of the pressure sensor of the present invention can measure pressure in a range from about minus 700 mm Hg to about 150 mm Hg. The embodiments of this invention can provide this range of measurement with accuracy approximately that of the greater of +/- 10% of the range or 10 mmHg. Further, peak detection capabilities of the embodiments of this invention encompass, for low pressure, up to 50 mm, and for high pressure, 70 mm. This can be achieved by straightforward location of a pixel at image sensor 30 where the signal (received light intensity) is the highest.

Pressure sensing assembly 10 of the present invention thus allows for the noninvasive measurement of pressure within a chamber 20 by optical means. One skilled in the art will also recognize that by varying the thickness of diaphragm 18, the optical properties of lenses 14, 26, or mirror 16 and/or the relative position of these components, the pressure range that can be detected by noninvasive pressure sensor 10 can be adjusted for a particular implementation

Although the present invention has been described in detail herein with reference to the illustrated embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons ordinarily skilled in the art having reference to this description. Thus, while the present invention has been described in particular reference to the general area of fluidic surgical systems, the teachings contained herein apply equally where ever it is desirous to provide noninvasive pressure sensing to avoid, for example contact with a contaminated fluid.

**Claims**

1. A non-invasive pressure sensing assembly, comprising:

   a plurality of coherent light sources (12), wherein the plurality of coherent light sources are located in a fixed relationship to one another;
   an image sensor (30);
   a pressure chamber (20), comprising a flexible diaphragm (18), the flexible diaphragm configured to flex in response to a change in pressure in the pressure chamber and operable to reflect a beam of light (13) originating from each of the plurality of coherent light sources onto the image sensor;
   wherein the light sources (20) are configured to direct a plurality of coherent light beams (13) at a known incidence angle onto the flexible diaphragm such that the plurality of coherent light beams (13) form a pattern of light spots (22, 24) on the diaphragm, and the image (30) sensor is operable to capture an image of the light spot pattern reflected from the diaphragm, the light spot pattern being indicative of the pressure within the pressure chamber; and
   the assembly further comprising a processor operably coupled to the image sensor to receive the captured light spot pattern of the reflected light beams (28) and to determine therefrom the pressure within the pressure chamber (20).

2. The assembly of Claim 1, wherein the pattern of the reflected beams (28) of light indicates the spatial relationship between the spots formed by the beams of light (13) incident on the diaphragm (18).

3. The assembly of Claim 1, wherein the plurality of coherent light sources (12) comprises a first coherent light source and a second coherent light source, providing, respectively, a first light beam and a second light beam.

4. The assembly of Claim 1, further comprising computer executable software instructions operable to cause the processor to determine the pressure within the pressure chamber (20) from the pattern of the reflected light beams (28).

5. The assembly of Claim 1, further comprising a fluidics interface operably coupled to the processor for receiving instructions from the processor to control fluid flow in a fluidics system coupled to said pressure chamber (20).

6. The assembly of Claim 1, further comprising a calibration interface for providing calibration inputs to the processor.

7. The assembly of Claim 1, further comprising imaging optics (26) for focusing the reflected light beams (28) from the diaphragm (18) onto the image sensor (30).

8. The assembly of Claim 7, wherein the imaging optics (26) comprises a lens.

9. The assembly of Claim 1, further comprising light source optics (14,16) for focusing the beams of light (13) originating from the plurality of light sources (12) onto the diaphragm (18).

10. The assembly of Claim 9, wherein the light source optics comprise a lens (14) and a mirror (16).

11. The assembly of Claim 10, wherein the mirror (16) reflects the beams of light (13) from the plurality of light sources (12) onto the diaphragm (18) at a known angle of incidence.

12. The assembly of Claim 11, wherein the assembly is calibrated for a reference diaphragm position and the known angle of incidence.

13. The assembly of Claim 11, wherein the assembly is calibrated for a reference diaphragm position and the known angle of incidence.

14. The assembly of Claim 13, wherein the reference diaphragm position corresponds to a reference pressure in the pressure chamber (20).

15. The assembly of Claim 1, wherein the plurality of light sources (12) are laser diodes.

16. The assembly of Claim 1, wherein the plurality of light sources (12) are laser light sources.

17. The assembly of Claim 1, wherein the image sensor (30) is a CMOS image sensor.

18. The assembly of Claim 1, wherein the image sensor (30) is a charge-coupled device.

19. The assembly of Claim 1, wherein the diaphragm (18) is formed from stainless steel.

20. The assembly of Claim 1, wherein the plurality of coherent light sources (12) comprises a first coherent light source and a second coherent light source, providing, respectively, a first light beam (13) and a second light beam (13).

21. The assembly of Claim 1, wherein the pressure chamber (20) and diaphragm (18) are formed as a replaceable cassette.

22. The assembly of Claim 5, wherein the wherein the fluidics system is part of an ophthalmic surgical system.

23. A method for non- invasive pressure sensing, comprising:

directing a plurality of coherent light beams (13), at a known incidence angle, onto a flexible diaphragm (18), wherein the flexible diaphragm forms a portion of a pressure chamber (20) and is configured to flex in response to a change in pressure in the pressure chamber and wherein the plurality of coherent light beams form a pattern of light spots (22,24) on the diaphragm;
capturing at an image sensor (30) an image of the light spot pattern reflected from the diaphragm, wherein the light spot pattern is indicative of the pressure within the pressure chamber; and
determining, at a processor operably coupled to receive image data from the image sensor, the pressure within the pressure chamber from the captured light spot pattern image.

**24.** The method of Claim 23, wherein the light spot pattern indicates the pressure within the pressure chamber (20) relative to a reference light spot pattern (22,24) resulting from a reference position of the diaphragm (18) corresponding to a reference pressure.

**25.** The method of Claim 24, further comprising calibrating the processor at the reference pressure by associating the reference light spot pattern (22,24) to the reference diaphragm position corresponding to the reference pressure.

**26.** The method of Claim 23, wherein the plurality of coherent light beams (13) are provided by a plurality of coherent light sources (12).

**27.** The method of Claim 26, wherein the plurality of coherent light sources (12) are laser light sources.

**28.** The method of Claim 23, wherein the plurality of light beams (13) is two light beams.

**29.** The method of Claim 23, wherein the determining step is performed by computer executable software instructions operable to cause the processor to determine the pressure within the pressure chamber from the light spot pattern image.

**30.** The method of Claim 23, further comprising the step of providing instructions from the processor to a fluidics interface operably coupled to the processor for controlling fluid flow in a fluidics system coupled to the pressure chamber (20).

**31.** The method of Claim 23, wherein the processor further comprises a calibration interface for providing calibration inputs to the processor.

**32.** The method of Claim 23, further comprising the step of focusing the reflected light spot pattern (22,24) on the image sensor through imaging optics (26).

**33.** The method of Claim 32, wherein the imaging optics (26) comprise a lens.

**34.** The method of Claim 23, further comprising the step of focusing the plurality of coherent light beams onto the diaphragm (18) through light source optics (14,16).

**35.** The method of Claim 34, wherein the light source optics comprise a lens (14) and a mirror (16).

**36.** The method of Claim 35, wherein the mirror (16) directs each of the plurality of beams of light onto the diaphragm (18) at the known incidence angle.

**37.** The method of Claim 23, wherein the image sensor (30) is a CMOS image sensor.

**38.** The method of Claim 23, wherein the image sensor (30) is a charge-coupled device.

**39.** The method of Claim 23, wherein the diaphragm (18) is formed of stainless steel.

**40.** The method of Claim 23, wherein the pressure chamber (20) and the diaphragm (18) are formed as a replaceable cassette.

**41.** The method of Claim 40, wherein the method is implemented to sense pressure in an ophthalmic surgical system.

**42.** Computer software, when stored in a memory, or which when executing in a processing module, includes operational instructions for operation of the assembly as claimed in any preceding claim that cause the processing module to:

direct a plurality of coherent light beams (13) from a plurality of coherent light sources (12), wherein the plurality of coherent light sources are located in a fixed relationship to one another, at a known incidence angle, onto a flexible diaphragm (18), configured to flex in response to a change in pressure in a pressure chamber (20) and operable to reflect a beam of light (13) originating from each of the plurality of coherent light sources onto an image sensor (30), wherein the plurality of coherent light beams form a pattern of light spots (22,24) on the diaphragm; capture at the image sensor (30) an image of the light spot pattern reflected from the diaphragm (18), wherein the light spot pattern is indicative of the pressure within the pressure chamber (20); and determine the pressure within the pressure chamber (20) from the captured
light spot pattern image.

**Patentansprüche**

1. Nicht invasive Druckfühlbaueinheit, umfassend:

   eine Vielzahl von kohärenten Lichtquellen (12), bei der die mehreren kohärenten Lichtquellen in einer festen Beziehung zueinander angeordnet sind;
   einen Bildsensor (30);
   eine Druckkammer (20), die eine elastische Membran (18) aufweist, wobei die elastische Membran so gestaltet ist, dass sie sich als Reaktion auf eine Änderung des Druckes in der Druckkammer biegt und betriebsfähig ist, einen aus jeder der Vielzahl von kohärenten Lichtquellen entstehenden Lichtstrahl (13) auf den Bildsensor zu reflektieren;
   bei der die Lichtquellen (20) (12) so gestaltet sind, um eine Vielzahl von kohärenten Lichtstrahlen (13) in einem bekannten Einfallswinkel auf die elastische Membran zu richten, so dass die mehreren kohärenten Lichtstrahlen (13) ein Muster von Lichtflecken (22, 24) auf der Membran bilden, und der Bildsensor (30) betriebsfähig ist, ein Bild des von der Membran reflektierten Lichtfleckmusters zu erfassen, wobei das Lichtfleckmuster den Druck innerhalb der Druckkammer anzeigt; und
   die Baueinheit des Weiteren einen Prozessor umfasst, der betriebsfähig mit dem Bildsensor gekoppelt ist, um das erfasste Lichtfleckmuster der reflektierten Lichtstrahlen (28) aufzunehmen und daraus den Druck innerhalb der Druckkammer (20) zu bestimmen.

2. Baueinheit nach Anspruch 1, bei der das Muster der reflektierten Lichtstrahlen (28) die räumliche Beziehung zwischen den Flecken, die durch die auf die Membran (18) einfallenden Lichtstrahlen (13) gebildet werden, anzeigt.

3. Baueinheit nach Anspruch 1, bei der die Vielzahl von kohärenten Lichtquellen (12) eine erste kohärente Lichtquelle und eine zweite kohärente Lichtquelle umfasst, die jeweils einen ersten Lichtstrahl und einen zweiten Lichtstrahl bereitstellen.

4. Baueinheit nach Anspruch 1, die des Weiteren computer-ladefähige Softwareanweisungen umfasst, die betriebsfähig sind, um zu bewirken, dass der Prozessor aus dem Muster der reflektierten Lichtstrahlen (28) den Druck innerhalb der Druckkammer (20) bestimmt.

5. Baueinheit nach Anspruch 1, des Weiteren umfassend eine Fluidik-Schnittstelle, die mit dem Prozessor betriebsfähig gekoppelt ist, um Anweisungen von dem Prozessor zum Steuern eines Fluidstroms in einem mit der Druckkammer (20) verbundenen Fluidik-System zu empfangen.

6. Baueinheit nach Anspruch 1, des Weiteren umfassend eine Eichschnittstelle zum Bereitstellen von Eicheingaben für den Prozessor.

7. Baueinheit nach Anspruch 1, des Weiteren mit einer Abbildungsoptik (26) zum Fokussieren der reflektierten Lichtstrahlen (28) von der Membran (18) auf den Bildsensor (30).

8. Baueinheit nach Anspruch 7, bei der die Abbildungsoptik (26) eine Linse enthält.

9. Baueinheit nach Anspruch 1, des Weiteren mit einer Lichtquellenoptik (14, 16) zum Fokussieren der aus der Vielzahl von Lichtquellen (12) entstehenden Lichtstrahlen (13) auf die Membran (18).

10. Baueinheit nach Anspruch 9, bei der die Lichtquellenoptik eine Linse (14) und einen Spiegel (16) enthält.

11. Baueinheit nach Anspruch 10, bei der der Spiegel (16) die Lichtstrahlen (13) aus der Vielzahl von Lichtquellen (12) in einem bekannten Einfallswinkel auf die Membran (18) reflektiert.

12. Baueinheit nach Anspruch 11, wobei die Baueinheit für eine Referenzposition der Membran und den bekannten Einfallswinkel geeicht ist.

**13.** Baueinheit nach Anspruch 11, wobei die Baueinheit für eine Referenzposition der Membran und den bekannten Einfallswinkel geeicht ist.

**14.** Baueinheit nach Anspruch 13, bei der die Membranreferenzposition einem Referenzdruck in der Druckkammer (20) entspricht.

**15.** Baueinheit nach Anspruch 1, bei der die Vielzahl von Lichtquellen (12) Laserdioden sind.

**16.** Baueinheit nach Anspruch 1, bei der die Vielzahl von Lichtquellen (12) Laserlichtquellen sind.

**17.** Baueinheit nach Anspruch 1, bei der der Bildsensor (30) ein CMOS-Bildsensor ist.

**18.** Baueinheit nach Anspruch 1, bei der der Bildsensor (30) ein CCD-Element ist.

**19.** Baueinheit nach Anspruch 1, bei der die Membran (18) aus nicht rostendem Stahl gebildet ist.

**20.** Baueinheit nach Anspruch 1, bei der die Vielzahl von kohärenten Lichtquellen (12) eine erste kohärente Lichtquelle und eine zweite kohärente Lichtquelle umfasst, die jeweils einen ersten Lichtstrahl (13) und einen zweiten Lichtstrahl (13) bereitstellen.

**21.** Baueinheit nach Anspruch 1, bei der Druckkammer (20) und Membran (18) als eine auswechselbare Kassette ausgebildet sind.

**22.** Baueinheit nach Anspruch 5, bei der das Fluidiksystem Teil eines augenchirurgischen Systems ist.

**23.** Verfahren zur nicht invasiven Druckfühlung, umfassend:

Richten einer Vielzahl von kohärenten Lichtstrahlen (13) in einem bekannten Einfallswinkel auf eine elastische Membran (18), wobei die elastische Membran einen Teil einer Druckkammer (20) bildet und so gestaltet ist, dass sie sich als Reaktion auf eine Änderung des Druckes in der Druckkammer biegt, und wobei die mehreren kohärenten Lichtstrahlen ein Muster von Lichtflecken (22, 24) auf der Membran bilden;
Erfassen an einem Bildsensor (30) eines Bildes des von der Membran reflektierten Lichtfleckmusters, wobei das Lichtfleckmuster den Druck innerhalb der Druckkammer anzeigt; und
Bestimmen des Druckes innerhalb der Druckkammer aus dem erfassten Bild des Lichtfleckmusters an einem Prozessor, der betriebsfähig gekoppelt ist, um Bilddaten von dem Bildsensor zu empfangen.

**24.** Verfahren nach Anspruch 23, bei dem das Lichtfleckmuster den Druck innerhalb der Druckkammer (20) im Verhältnis zu einem Referenzlichtfleckmuster (22, 24) anzeigt, das sich aus einer einem Referenzdruck entsprechenden Referenzposition der Membran (18) ergibt.

**25.** Verfahren nach Anspruch 24, des Weiteren umfassend das Eichen des Prozessors auf den Referenzdruck, indem das Referenzlichtfleckmuster (22, 24) mit der dem Referenzdruck entsprechenden Referenzposition der Membran in Zusammenhang gebracht wird.

**26.** Verfahren nach Anspruch 23, bei dem die Vielzahl von kohärenten Lichtstrahlen (13) durch eine Vielzahl von kohärenten Lichtquellen (12) bereitgestellt wird.

**27.** Verfahren nach Anspruch 26, bei dem die Vielzahl von kohärenten Lichtquellen (12) Laserlichtquellen sind.

**28.** Verfahren nach Anspruch 23, bei dem die mehreren Lichtstrahlen (13) zwei Lichtstrahlen sind.

**29.** Verfahren nach Anspruch 23, bei dem der Schritt des Bestimmens durch computer-ladefähige Softwareanweisungen ausgeführt wird, die betriebsfähig sind, um zu bewirken, dass der Prozessor den Druck innerhalb der Druckkammer aus dem Bild des Lichtfleckmusters bestimmt.

**30.** Verfahren nach Anspruch 23, des Weiteren umfassend den Schritt des Bereitstellens von Anweisungen von dem Prozessor an eine Fluidikschnittstelle, die mit dem Prozessor betriebsfähig gekoppelt ist, um einen Fluidstrom in einem mit der Druckkammer (20) verbundenen Fluidiksystem zu steuern.

**31.** Verfahren nach Anspruch 23, bei dem der Prozessor des Weiteren eine Eichschnittstelle zur Bereitstellung von Eicheingaben in den Prozessor umfasst.

**32.** Verfahren nach Anspruch 23, des Weiteren umfassend den Schritt des Fokussierens des reflektierten Lichtfleckmusters (22, 24) auf dem Bildsensor durch Abbildungsoptik (26).

**33.** Verfahren nach Anspruch 32, bei dem die Abbildungsoptik (26) eine Linse enthält.

**34.** Verfahren nach Anspruch 23, des Weiteren umfassend den Schritt des Fokussierens der Vielzahl von kohärenten Lichtstrahlen auf die Membran (18) durch Lichtquellenoptik (14, 16).

**35.** Verfahren nach Anspruch 34, bei dem die Lichtquellenoptik eine Linse (14) und einen Spiegel (16) enthält.

**36.** Verfahren nach Anspruch 35, bei dem der Spiegel (16) jeden der Vielzahl von Lichtstrahlen in dem bekannten Einfallswinkel auf die Membran (18) richtet.

**37.** Verfahren nach Anspruch 23, bei dem der Bildsensor (30) ein CMOS-Bildsensor ist.

**38.** Verfahren nach Anspruch 23, bei dem der Bildsensor (30) ein CCD-Element ist.

**39.** Verfahren nach Anspruch 23, bei dem die Membran (18) aus nicht rostendem Stahl gebildet ist.

**40.** Verfahren nach Anspruch 23, bei dem die Druckkammer (20) und die Membran (18) als eine auswechselbare Kassette ausgebildet sind.

**41.** Verfahren nach Anspruch 40, wobei das Verfahren zum Fühlen von Druck in einem augenchirurgischen System durchgeführt wird.

**42.** Computersoftware, die bei Speicherung in einem Speicher oder bei Ausführung in einem Verarbeitungsmodul Arbeitsanweisungen umfasst zum Betrieb der Baueinheit nach jedem vorhergehenden Anspruch, die veranlassen, dass das Verarbeitungsmodul:

eine Vielzahl von kohärenten Lichtstrahlen (13) aus einer Vielzahl von kohärenten Lichtquellen (12), wobei die mehreren kohärenten Lichtquellen in einer festen Beziehung zueinander angeordnet sind, in einem bekannten Einfallswinkel auf eine elastische Membran (18) richtet, die so gestaltet ist, dass sie sich als Reaktion auf eine Änderung des Druckes in einer Druckkammer (20) biegt, und betriebsfähig ist, einen von jeder der mehreren kohärenten Lichtquellen entstehenden Lichtstrahl (13) auf einen Bildsensor (30) zu reflektieren, wobei die mehreren kohärenten Lichtstrahlen ein Muster von Lichtflecken (22, 24) auf der Membran bilden; an dem Bildsensor (30) ein Bild des von der Membran (18) reflektierten Lichtfleckmusters erfasst, wobei das Lichtfleckmuster den Druck innerhalb der Druckkammer (20) anzeigt; und
den Druck innerhalb der Druckkammer (20) aus dem erfassten Bild des Lichtfleckmusters bestimmt.

**Revendications**

**1.** Ensemble non invasif de détection de pression, comprenant :

une pluralité de sources de lumière cohérente (12), la pluralité de sources de lumière cohérente étant positionnées dans une relation fixe les unes par rapport aux autres ;
un capteur d'image (30) ;
une chambre de pression (20), comprenant une membrane souple (18), la membrane souple étant configurée pour se déformer en réponse à un changement de pression dans la chambre de pression, et étant opérationnelle pour réfléchir un faisceau de lumière (13) provenant de chacune de la pluralité de sources de lumière cohérente sur le capteur d'image ;
dans lequel les sources de lumière (20) sont configurées pour diriger une pluralité de faisceaux de lumière cohérente (13) selon un angle d'incidence connu jusque sur la membrane souple de sorte que la pluralité de faisceaux de lumière cohérente (13) forment un motif de points lumineux (22, 24) sur la membrane, et le capteur d'image (30) est opérationnel pour capturer une image du motif de points lumineux réfléchi par la membrane, le motif de points lumineux étant représentatif de la pression dans la chambre de pression ; et
l'ensemble comprenant en outre un processeur couplé de manière opérationnelle au capteur d'image pour recevoir le motif de points lumineux capturé des faisceaux de lumière réfléchis (28), et pour déterminer à partir de celui-ci la pression dans la chambre de pression (20).

2. Ensemble selon la revendication 1, dans lequel le motif des faisceaux réfléchis (28) de lumière indique la relation spatiale entre les points formés par les faisceaux de lumière (13) incidents sur la membrane (18).

3. Ensemble selon la revendication 1, dans lequel la pluralité de sources de lumière cohérente (12) comportent une première source de lumière cohérente et une seconde source de lumière cohérente fournissant, respectivement, un premier faisceau de lumière et un second faisceau de lumière.

4. Ensemble selon la revendication 1, comprenant en outre des instructions logicielles pouvant être exécutées par un ordinateur opérationnelles pour amener le processeur à déterminer la pression dans la chambre de pression (20) à partir du motif des faisceaux de lumière réfléchis (28).

5. Ensemble selon la revendication 1, comprenant en outre une interface fluidique couplée de manière opérationnelle au processeur pour recevoir des instructions provenant du processeur afin de commander un écoulement de fluide dans un système fluidique couplé à ladite chambre de pression (20).

6. Ensemble selon la revendication 1, comprenant en outre une interface de calibrage pour fournir des entrées de calibrage au processeur.

7. Ensemble selon la revendication 1, comprenant en outre des optiques d'imagerie (26) pour focaliser les faisceaux de lumière réfléchis (28) provenant de la membrane (18) sur le capteur d'image (30).

8. Ensemble selon la revendication 7, dans lequel les optiques d'imagerie (26) comprennent une lentille.

9. Ensemble selon la revendication 1, comprenant en outre des optiques de source de lumière (14, 16) pour focaliser des faisceaux de lumière (13) provenant de la pluralité de sources de lumière (12) sur la membrane (18).

10. Ensemble selon la revendication 9, dans lequel les optiques de source de lumière comprennent une lentille (14) et un miroir (16).

11. Ensemble selon la revendication 10, dans lequel le miroir (16) réfléchit les faisceaux de lumière (13) provenant de la pluralité de sources de lumière (12) sur la membrane (18) selon un angle d'incidence connu.

12. Ensemble selon la revendication 11, dans lequel l'ensemble est calibré pour une position de membrane de référence et l'angle d'incidence connu.

13. Ensemble selon la revendication 11, dans lequel l'ensemble est calibré pour une position de membrane de référence et l'angle d'incidence connu.

14. Ensemble selon la revendication 13, dans lequel la position de membrane de référence correspond à une pression de référence dans la chambre de pression (20).

15. Ensemble selon la revendication 1, dans lequel la pluralité de sources de lumière (12) sont des diodes lasers.

16. Ensemble selon la revendication 1, dans lequel la pluralité de sources de lumière (12) sont des sources de lumière laser.

17. Ensemble selon la revendication 1, dans lequel le capteur d'image (30) est un capteur d'image CMOS.

18. Ensemble selon la revendication 1, dans lequel le capteur d'image (30) est un dispositif à couplage de charge.

19. Ensemble selon la revendication 1, dans lequel la membrane (18) est formée d'acier inoxydable.

20. Ensemble selon la revendication 1, dans lequel la pluralité de sources de lumière cohérente (12) comprend une première source de lumière cohérente et une seconde source de lumière cohérente fournissant respectivement un premier faisceau de lumière (13) et un second faisceau de lumière (13).

21. Ensemble selon la revendication 1, dans lequel la chambre de pression (20) et la membrane (18) sont formées sous la forme d'une cassette remplaçable.

22. Ensemble selon la revendication 5, dans lequel le système fluidique est une partie d'un système chirurgical ophtalmique.

23. Procédé non invasif de détection d'une pression, comprenant les étapes consistant à :

diriger une pluralité de faisceaux de lumière cohérente (13), selon un angle d'incidence connu, sur une membrane souple (18), dans lequel la membrane souple forme une partie d'une chambre de pression (20), et est configurée pour se déformer en réponse à un changement de pression dans la chambre de pression, et dans lequel la pluralité de faisceaux de lumière cohérente forme un motif de points lumineux (22, 24) sur la membrane ;
capturer au niveau d'un capteur d'image (30) une image du motif de points lumineux réfléchi par la membrane, le motif de points lumineux étant représentatif de la pression dans la chambre de pression ; et
déterminer, au niveau d'un processeur couplé de manière opérationnelle pour recevoir des données d'image provenant du capteur d'image, la pression dans la chambre de pression à partir de l'image du motif de points lumineux capturée.

24. Procédé selon la revendication 23, dans lequel le motif de points lumineux indique la pression dans la chambre de pression (20) par rapport à un motif de points lumineux de référence (22, 24) résultant d'une position de référence de la membrane (18) correspondant à une pression de référence.

25. Procédé selon la revendication 24, comprenant en outre le calibrage du processeur à la pression de référence en associant le motif de points lumineux de référence (22, 24) à la position de membrane de référence correspondant à la pression de référence.

26. Procédé selon la revendication 23, dans lequel la pluralité de faisceaux de lumière cohérente (13) sont fournis par une pluralité de sources de lumière cohérente (12).

27. Procédé selon la revendication 26, dans lequel la pluralité de sources de lumière cohérente (12) sont des sources de lumière laser.

28. Procédé selon la revendication 23, dans lequel la pluralité de faisceaux de lumière (13) sont deux faisceaux de lumière.

29. Procédé selon la revendication 23, dans lequel l'étape de détermination est effectuée par des instructions logicielles pouvant être exécutées par un ordinateur opérationnelles pour amener le processeur à déterminer la pression dans la chambre de pression à partir de l'image du motif de points lumineux.

30. Procédé selon la revendication 23, comprenant en outre l'étape consistant à fournir des instructions à partir du processeur vers une interface fluidique couplée de manière opérationnelle au processeur pour commander un écoulement de fluide dans un système fluidique couplé à la chambre de pression (20).

31. Procédé selon la revendication 23, dans lequel le processeur comprend en outre une interface de calibrage pour fournir des entrées de calibrage au processeur.

32. Procédé selon la revendication 23, comprenant en outre l'étape consistant à focaliser les motifs de points lumineux réfléchis (22, 24) sur le capteur d'image à travers des optiques d'imagerie (26).

33. Procédé selon la revendication 32, dans lequel les optiques d'imagerie (26) comportent une lentille.

34. Procédé selon la revendication 23, comprenant en outre l'étape consistant à focaliser la pluralité de faisceaux de lumière cohérente sur la membrane (18) à travers des optiques de source de lumière (14, 16).

35. Procédé selon la revendication 34, dans lequel les optiques de source de lumière comprennent une lentille (14) et un miroir (16).

36. Procédé selon la revendication 35, dans lequel le miroir (16) dirige chacun de la pluralité de faisceaux de lumière sur la membrane (18) au niveau de l'angle d'incidence connu.

37. Procédé selon la revendication 23, dans lequel le capteur d'image (30) est un capteur d'image CMOS.

38. Procédé selon la revendication 23, dans lequel le capteur d'image (30) est un dispositif à couplage de charge.

39. Procédé selon la revendication 23, dans lequel la membrane (18) est formée d'acier inoxydable.

40. Procédé selon la revendication 23, dans lequel la chambre de pression (20) et la membrane (18) sont formées sous la forme d'une cassette remplaçable.

41. Procédé selon la revendication 40, dans lequel le procédé est mis en oeuvre pour détecter une pression dans un système chirurgical ophtalmique.

42. Logiciel informatique, lorsque mémorisé dans une mémoire, ou qui lorsqu'il est exécuté dans un module de traitement, comprend des instructions de fonctionnement pour actionner l'ensemble selon l'une quelconque des revendications précédentes qui amènent le module de traitement à :

diriger une pluralité de faisceaux de lumière cohérente (13) depuis une pluralité de sources de lumière cohérente (12), dans lequel la pluralité de sources de lumière cohérente sont positionnées dans une relation fixe les unes par rapport aux autres, au niveau d'un angle d'incidence connu, jusque sur une membrane souple (18), configurée pour se déformer en réponse à un changement de pression dans une chambre de pression (20), et opérationnelle pour réfléchir un faisceau de lumière (13) provenant de chacune de la pluralité de sources de lumière cohérente sur un capteur d'image (30), dans lequel la pluralité de faisceaux de lumière cohérente forment un motif de points lumineux (22, 24) sur la membrane ;
capturer au niveau du capteur d'image (30) une image du motif de points lumineux réfléchi par la membrane (18), dans lequel le motif de points lumineux est représentatif de la pression dans la chambre de pression (20) ;
et déterminer la pression dans la chambre de pression (20) à partir de l'image du motif de points lumineux capturé.

Fig. 1

Fig. 2

EP 1 612 532 B1

Fig. 3A

$L_1$

40

Fig. 3B

$L_2$

42

Fig. 4

Fig. 5

Laser beam

$\Theta$

Fig. 6

x axis

Laser beam trajectory
over pressure range

y axis

Diaphragm center

| $\triangle y$ | | $\triangle z$ | | Pressure |
|---|---|---|---|---|
| $\triangle y1$ | | $\triangle z1$ | | $\triangle p1$ |
| $\triangle y2$ | | $\triangle z2$ | | $\triangle p2$ |
| $\triangle y3$ | Calculation | $\triangle z3$ | Calculation | $\triangle p3$ |
| $\triangle y4$ | | $\triangle z4$ | | $\triangle p4$ |
| $\triangle y5$ | | $\triangle z5$ | | $\triangle p5$ |
| $\triangle y6$ | | $\triangle z6$ | | $\triangle p6$ |
| $\triangle y7$ | | $\triangle z7$ | | $\triangle p7$ |
| $\triangle y8$ | | $\triangle z8$ | | $\triangle p8$ |

Use

Fig. 7

## Fig. 8

Imaging optics — 140

Image sensor — 150

Interface to fluidics — 170

Memory — 105

Processor — 100

Calibration interface — 160

Laser optics — 130

Lasers — 120

Laser drivers — 110

Incident laser beam

Path of intercept of laser with diaphragm in different positions

$\Theta = AOI$

$\Phi_{tilt}$

Image sensor tilted to maintain focused image of laser spot over extended travel range

## Fig. 9

## Fig. 10

### Spot Shift vs. Pressure

EP 1 612 532 B1

**EP 1 612 532 B1**

**REFERENCES CITED IN THE DESCRIPTION**

**Patent documents cited in the description**

- US 1718494 A
- US 2260837 A
- US 2510073 A
- US 2583941 A
- US 3805617 A
- US 61008703 A
- WO 2004045395 A
- WO 9324817 A
- US 5392653 A
- WO 9923463 A
- EP 0157606 A